# EUROPÄISCHE PATENTSCHRIFT

(11) **EP 2 583 544 B1**
(45) Veröffentlichungstag und Bekanntmachung des Hinweises auf die Patenterteilung: **18.11.2015**
(21) Anmeldenummer: 12178798.0
(22) Anmeldetag: 01.08.2012
(51) Int. Cl.: A01B 69/00, A01B 79/00

(54) **Visualisierungseinrichtung**
Visualisation device
Dispositif de visualisation

(30) Priorität: 20.10.2011 DE 102011054630
(43) Veröffentlichungstag der Anmeldung: 24.04.2013
(73) Patentinhaber: CLAAS E-Systems KGaA mbH & Co KG, 33330 Gütersloh (DE)
(72) Erfinder: Meyer zu Helligen, Lars Peter, 32139 Spenge (DE); Weiland, Kalle, 33647 Bielefeld (DE)

(56) Entgegenhaltungen:
- EP-A1- 1 380 202
- EP-A1- 2 020 170

## Beschreibung

Die Erfindung betrifft eine landwirtschaftliche Arbeitsmaschine mit einer Vorrichtung zur Visualisierung von Steuerungsabläufen der landwirtschaftlichen Arbeitsmaschine nach dem Oberbegriff des Anspruchs 1.

Aus der EP 0 820 688 ist eine Vorrichtung zur Ansteuerung von Stellorganen eines Arbeitsfahrzeugs bekannt geworden, bei der der Fahrer des Arbeitsfahrzeugs eine Steuersequenz für das Arbeitsfahrzeug frei programmieren und die programmierte Steuersequenz durch Betätigung einer Bedientaste aktivieren kann. Derartige Systeme haben den Vorteil, dass komplizierte Steuerungsabläufe automatisierbar werden, sodass der Fahrer der Arbeitsmaschine von aufwendigen Steuerungsprozessen entlastet wird. Zum Einsatz kommen solche automatisierten Steuerungsroutinen vor allem beim Fahren von landwirtschaftlichen Arbeitsmaschinen im sogenannten Vorgewende eines zu bearbeitenden Territoriums. Dort muss regelmäßig beim Herausfahren aus dem zu bearbeitenden Territorium zunächst die Fahrgeschwindigkeit reduziert, sodann die Arbeitsorgane außer Eingriff gebracht und das Arbeitswerkzeug angehoben werden. Nachdem die landwirtschaftliche Erntemaschine im Vorgewende gewendet hat muss schließlich in umgekehrter Reihenfolge das Arbeitswerkzeug wieder abgesenkt, die Arbeitsorgane in Eingriff gebracht und die Fahrgeschwindigkeit wieder erhöht werden. Diese insgesamt sehr komplexen Steuerungsvorgänge lassen sich durch freiprogrammierbare Steuersequenzen sehr komfortabel automatisieren. Damit der Fahrer der landwirtschaftlichen Arbeitsmaschine Informationen darüber erhält, welche Steuerungsabläufe die erstellte Steuersequenz umfasst ist eine als LC-Display ausgeführte Anzeigeeinheit zur Visualisierung der aktivierten Steuerungsabläufe vorgesehen. Derartige Anzeigesysteme sind vor allem bei vom Fahrer gelenkten landwirtschaftlichen Arbeitsmaschinen ausreichend, da der Fahrer in diesem Fällen unmittelbar in den Fahrzeugsteuerprozess eingebunden ist.

An ihre Grenzen stoßen derartige Visualisierungssysteme dann, wenn die landwirtschaftliche Arbeitsmaschine automatisch bestimmte vordefinierte Fahrtrouten abarbeitet. In diesen Fällen ist der Fahrzeugbediener nicht mehr unmittelbar in den Steuerungsprozess integriert und kann nur eingeschränkt nachvollziehen, ob die Steuerungsabläufe der aktivierten Steuersequenz mit der momentanen Position des Fahrzeugs korrespondieren. Dem Abhilfe schaffend schlägt u.a. die EP 2 020 170 eine Anzeigevorrichtung vor, die die Steuerungsabläufe einer vorprogrammierten Steuersequenz visualisiert, sodass der Fahrer der landwirtschaftlichen Arbeitsmaschine über die abzuarbeitenden Steuerungsabläufe informiert ist. Neben dem eingeschränkten Bedienkomfort haben derartige Systeme insbesondere den Nachteil, dass kein unmittelbarer Bezug zwischen den abzuarbeitenden Steuerungsabläufen und der momentanen Position des landwirtschaftlichen Fahrzeugs auf dem zu bearbeitenden Territorium besteht.

Es ist deshalb Aufgabe der Erfindung die beschriebenen Nachteile des Standes der Technik zu vermeiden und insbesondere eine Vorrichtung vorzuschlagen, die einen unmittelbaren Bezug zwischen der Position des landwirtschaftlichen Fahrzeugs auf dem zu bearbeitenden Territorium und dem jeweils abzuarbeitenden Steuerungsablauf herstellt, sodass auch ein nicht unmittelbar in den Steuerungsprozess der landwirtschaftlichen Arbeitsmaschine integrierter Bediener stets über die ablaufenden Steuerungsprozesse informiert ist.

Diese Aufgabe wird erfindungsgemäß durch die kennzeichnenden Merkmale des Anspruchs 1 gelöst.

Indem die landwirtschaftliche Arbeitsmaschine eine Vorrichtung zur Visualisierung von Steuerungsabläufen der landwirtschaftlichen Arbeitsmaschine umfasst, die zumindest eine von der landwirtschaftlichen Arbeitsmaschine zurückzulegende Fahrstrecke visualisiert und die Steuerungsabläufe in graphischen Abbildungen hinterlegt sind, wobei die graphischen Abbildungen entlang der zurückzulegenden Fahrstrecke in der Reihenfolge ihrer Abarbeitung in der Visualisierungseinrichtung angezeigt werden wird sichergestellt, dass auch ein nicht unmittelbar in den Steuerungsprozess der landwirtschaftlichen Arbeitsmaschine integrierter Bediener stets über die ablaufenden Steuerungsprozesse informiert ist.

In einer vorteilhaften Ausgestaltung der Erfindung ist vorgesehen, dass die zurückzulegende Fahrstrecke von dem Wendeweg einer landwirtschaftlichen Arbeitsmaschine im Vorgewende eines zu bearbeitenden Territoriums gebildet wird, wobei der Vorgewendeweg vorzugsweise einen aus dem zu bearbeitenden Territorium herausführenden Fahrtroutenabschnitt, einen Vorgewendeabschnitt und einen in das zu bearbeitende Territorium hineinführenden Fahrtroutenabschnitt umfasst. Dies hat den Vorteil, dass die während des Fahrens der landwirtschaftlichen Arbeitsmaschine in dem sogenannten Vorgewende die während dieser Zeit ablaufenden Steuerungsvorgänge sehr übersichtlich in der Visualisierungseinrichtung darstellbar sind.

Ein sehr flexibler Einsatz der landwirtschaftlichen Arbeitsmaschine wird in einer weiteren vorteilhaften Ausgestaltung der Erfindung dann erreicht, wenn eine Vielzahl von Steuerungsabläufen eine Steuersequenz bilden.

Damit der Bediener der landwirtschaftlichen Arbeitsmaschine präzise und schnell erfassen kann, welcher Steuerungsablauf gerade aktiviert ist und welche Steuerungsabläufe noch aktiviert werden müssen ist in einer weiteren vorteilhaften Ausgestaltung vorgesehen, dass jeder Steuerungsablauf einer Steuersequenz durch ein Bild- und/oder Textelemente umfassendes Ikon visualisiert wird.

In einer weiteren vorteilhaften Ausgestaltung der Erfindung ist vorgesehen, dass die Anzeige eines einen Steuerungsablauf repräsentierenden Ikons der Abarbeitung des jeweiligen Steuerungsablaufs vorauseilt, sodass der Bediener der landwirtschaftlichen Arbeitsmaschine beispielsweise die Abarbeitung des kommenden Steuerungsablaufs abbrechen oder verzögern kann, falls äußere Umstände dies erforderlich machen.

Indem das einen abgearbeiteten Steuerungsablauf repräsentierende Ikon bei Abarbeitung nachfolgender Steuerungsabläufe in der Anzeigeeinheit sichtbar bleibt hat der Bediener der landwirtschaftlichen Arbeitsmaschine stets einen vollständigen Überblick über die abzuarbeitende Steuersequenz.

In einer weiteren vorteilhaften Ausgestaltung der Erfindung ist vorgesehen, dass bei Aktivierung einer Steuersequenz alle Steuerungsabläufe dieser Steuersequenz durch Visualisierung des jeweiligen Ikons angezeigt werden und das Ikon des jeweils abzuarbeitenden Steuerungsablaufs der Abarbeitung des jeweiligen Steuerungsablaufs vorauseilend hervorgehoben wird. Dies hat insbesondere den Effekt, dass der Bediener schnell - quasi auf einen Blick - erfassen kann, welcher Steuerungsablauf gerade aktiviert ist und welcher als nächstes aktiviert werden wird. Dieser Effekt wird auch dadurch noch unterstützt, dass die Hervorhebung durch Blinken oder Farbumschlag des jeweiligen Ikons bewirkt wird.

Ein hochflexibler und universeller Einsatz der Visualisierungseinrichtung wird vor allem dadurch bewirkt, dass die erfindungsgemäße landwirtschaftliche Arbeitsmaschine als Zugfahrzeug mit zumindest einem adaptierten Arbeitsgerät oder als landwirtschaftliche Erntemaschine mit Erntevorsatz ausgeführt ist, wobei die die Steuersequenz bildenden Steuerungsabläufe das Verbringen des Arbeitsgerätes oder Erntevorsatzes in eine Nichtarbeitsposition beim Ausfahren aus dem zu bearbeitenden Territorium und das Verbringen des Arbeitsgerätes oder Erntevorsatzes in eine Arbeitsposition beim Einfahren in das zu bearbeitende Territorium bewirken. Auf diese Weise wird es möglich, dass das erfindungsgemäße Visualisierungsprinzip maschinenunabhängig einsetzbar ist.

In an sich bekannter weise kann die abzuarbeitende Steuersequenz frei programmierbar sein, wobei die freie Programmierbarkeit der Steuersequenz von einem Bediener durch Betätigung der den jeweiligen Steuerungsablauf auslösenden Bedientasten und/oder durch Editierung an der Visualisierungseinrichtung bewirkt wird. Eine besonders bedienerfreundliche freie Programmierbarkeit der Steuersequenz wird in einer vorteilhaften Weiterbildung der Erfindung dann erreicht, wenn die Visualisierungseinrichtung einen Touchscreen-Monitor umfasst der ein Menüfeld aufweist in dem die die möglichen Steuerungsabläufe repräsentierenden Ikons abgelegt sind, wobei die Programmierung der Steuersequenz durch Ziehen des jeweiligen Ikons in die visualisierte zurückzulegende Fahrstrecke erfolgt.

Eine erhebliche Entlastung des Bedieners der landwirtschaftlichen Arbeitsmaschine wird auch dann erreicht, wenn in einer weiteren vorteilhaften Ausgestaltung der Erfindung der landwirtschaftlichen Arbeitsmaschine ein in der Visualisierungseinrichtung zumindest teilweise visualisierter Routenplan und zumindest ein Spurführungssystem in der Weise zugeordnet sind, dass die landwirtschaftliche Arbeitsmaschine selbsttätig den vordefinierten und in dem Routenplan abgespeicherten Fahrtrouten folgt. Dieser Effekt kann auch dadurch noch ausgebaut werden, dass der Routenplan auch die im Vorgewende zurückzulegende Fahrstrecke umfasst und das Spurführungssystem die landwirtschaftliche Arbeitsmaschine selbsttätig entlang dieser Fahrstrecke führt und die landwirtschaftliche Arbeitsmaschine selbsttätig die vorprogrammierte, die gewählten Steuerungsabläufe umfassende Steuersequenz abarbeitet.

In an sich bekannter Weise kann das der landwirtschaftlichen Arbeitsmaschine zugeordnete Spurführungssystem GPS-basiert und/oder Kamera-basiert und/oder Sensor-basiert arbeiten, wobei der Sensor als Laser-Sensor ausgeführt sein kann. Auf diese weise wird eine bewährte Technologie zum autonomen Fahren landwirtschaftlicher Arbeitsmaschinen mit einer Visualisierungstechnologie verbunden, die den Bediener der landwirtschaftlichen Arbeitsmaschine weitestgehend vom unmittelbaren Steuerungsprozess der landwirtschaftlichen Arbeitsmaschine im Vorgewende entlastet, sodass der Bediener beim Fahren im Vorgewende mehr Aufmerksamkeit den Umgebungsbedingungen widmen kann. Dies hat vorallem den Effekt, dass Unfall- und Kollisionsrisiken deutlich reduziert werden.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Übersicht eines Vorgewendemanagements beim Ausfahren der landwirtschaftlichen Arbeitsmaschine aus dem zu bearbeitenden Territorium
- Figur 2: eine schematische Übersicht eines Vorgewendemanagements beim Einfahren der landwirtschaftlichen Arbeitsmaschine in das zu bearbeitenden Territorium
- Figur 3: eine schematische Darstellung der erfindungsgemäßen Visualisierungseinrichtung
- Figur 4: eine weitere Detailansicht der erfindungsgemäßen Visualisierungseinrichtung

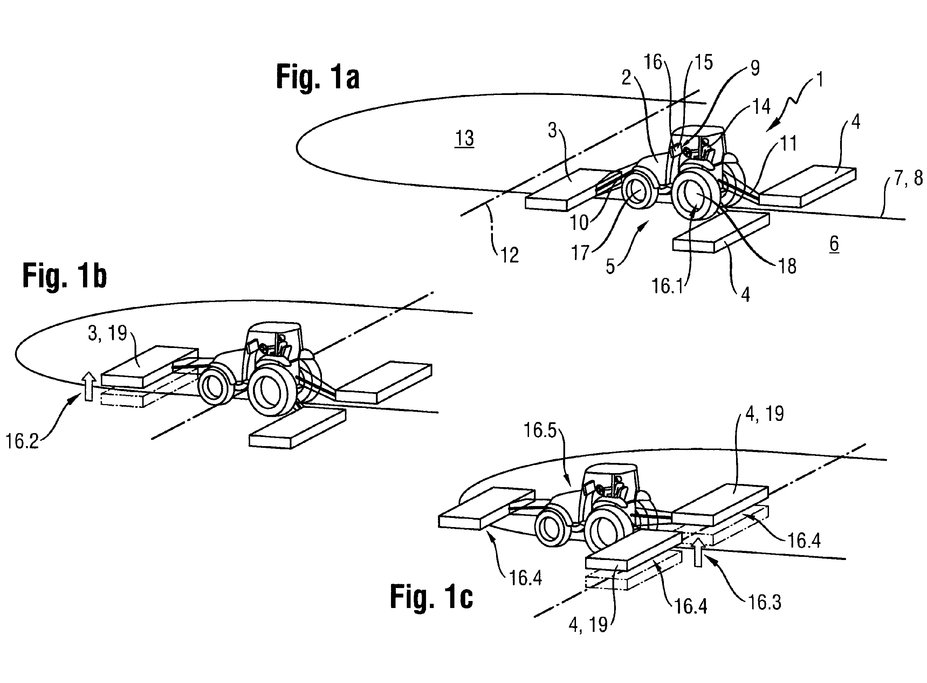

Figur 1a-c zeigt eine schematische Darstellung eines Vorgewendemanagements 1 am Beispiel einer als Traktor (2) - Mähwerk (3, 4) - Kombination ausgeführten landwirtschaftlichen Arbeitsmaschine 5. Die landwirtschaftliche Arbeitsmaschine 5 bewegt sich auf dem zu bearbeitenden Territorium 6, dem Feld, entlang von zurückzulegenden Fahrstrecken 7, wobei die zurückzulegende Fahrstrecke 7 in einem noch näher zu beschreibenden Routenplan 8 in einer dem Traktor 2 zugeordneten Steuer- und Regeleinrichtung 9 hinterlegt sind. In an sich bekannter Weise werden im dargestellten Ausführungsbeispiel über die Front- und Heckzapfwellen 10, 11 des Traktors 2 eine dem Traktor frontseitig zugeordnete Mäheinheit 3 und eine diesem heckseitig zugeordnete Mäheinheit 4 angetrieben. Nähert sich der Traktor 2 einer Grenzlinie 12, die das zu bearbeitende Territorium 6 von dem sogenannten Vorgewendebereich 13 trennt, wird das Vorgewendemanagement 1 entweder automatisch aktiviert oder vom Bediener 14 der landwirtschaftlichen Arbeitsmaschine 5 ausgelöst.

Im hier dargestellten Beispiel wird vor Erreichen der Grenzlinie 13 eine in der Steuer - und Regeleinrichtung 9 hinterlegte Steuersequenz 15 aktiviert, die in an sich bekannter Weise zeit-, weg- oder ereignisabhängig einen oder mehrere Steuerungsabläufe 16 auslöst. Ein erster aktivierter Steuerungsablauf 16.1 kann beispielsweise die Abschaltung der Differentialsperre an einer oder mehrere der Fahrzeugachsen 17, 18 bewirken, sodass das Fahrzeug bei der im Vorgewende 13 notwendigen Bewegungsrichtungsänderung besser lenkbar wird.

Erreicht die von der Frontzapfwelle 10 angetriebene Mäheinheit 3 die Grenzlinie 13 wird ein weiterer Steuerungsablauf 16.2 ausgelöst, der ein Verschwenken der frontseitigen Mäheinheit 3 in vertikaler Richtung in eine Nichtarbeitsposition 19 bewirkt (Figur 1 b).

Gemäß Figur 1c wird ein weiterer Steuerungsablauf 16.3 dann ausgelöst, wenn die heckseitig adaptierte Mäheinheit 4 die Grenzlinie 12 erreicht hat, wobei die Aktivierung dieses Steuerungsablaufs 16.3 das Ausheben der heckseitigen Mäheinheit 4 in eine Nichtarbeitsposition 19 bewirkt. Je nach Struktur der Steuersequenz 15 kann ein weiterer Steuerungsablauf 16.4 vorgesehen sein, der das Abschalten der Front- und Heckzapfwelle 10, 11 bewirkt, sodass die Mäheinheiten 3, 4 vor dem Wenden der landwirtschaftlichen Arbeitsmaschine 5 abgeschaltet werden. In einem weiteren Steuerungsablauf 16.5 kann sodann die Fahrgeschwindigkeit der landwirtschaftlichen Arbeitsmaschine 5 an die Fahrt im Vorgewendebereich 13 angepasst werden, wobei dies entweder eine Reduzierung oder Erhöhung der Fahrgeschwindigkeit sein kann.

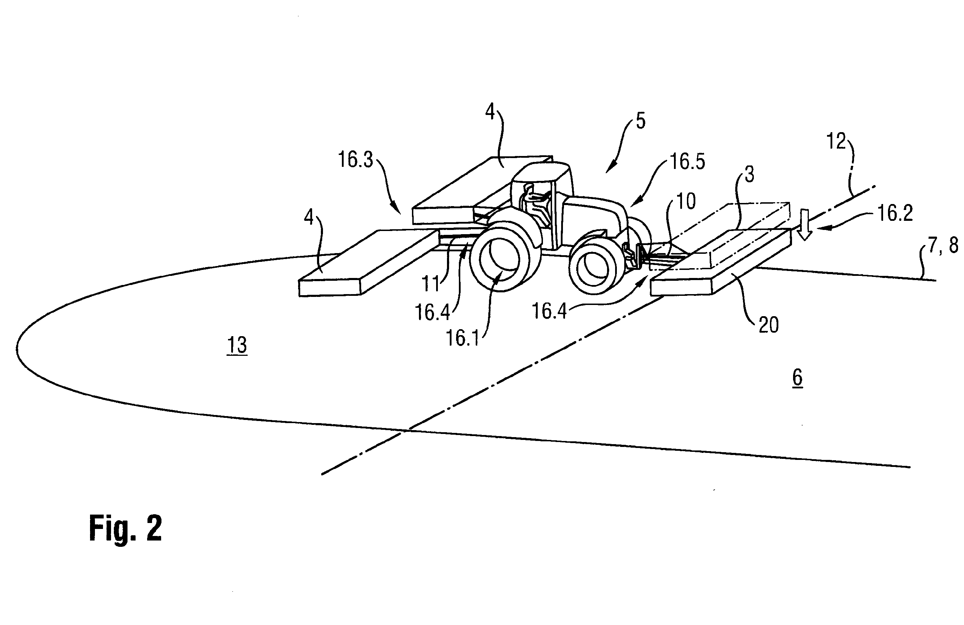

Hat die landwirtschaftliche Arbeitsmaschine 5 schließlich den Vorgewendebereich 13 gemäß Figur 2 passiert und bewegt sich entlang einer vordefinierten Fahrroute 8 wieder auf die den Vorgewendebereich 13 von dem zu bearbeitenden Territorium 6 trennende Grenzlinie 12 zu werden die zuvor aktivierten Steuerungsabläufe 16.1 - 16.5 in geänderter Reihenfolge nochmals durchlaufen, wobei zunächst die Fahrgeschwindigkeit der landwirtschaftlichen Arbeitsmaschine angepasst wird (Steuerungsablauf 16.5). Sodann werden die Front- und Heckzapfwellen 10, 11 zugeschaltet (Steuerungsablauf 16.4) und die frontseitige Mäheinheit 3 bis zum Erreichen der Grenzlinie 12 wieder in eine Arbeitsposition 20 abgesenkt (Steuerungsablauf 16.2). Erreicht schließlich die heckseitige Mäheinheit 4 die Grenzlinie 12 wird auch diese wieder in eine nicht dargestellte Arbeitsposition 20 abgesenkt (Steuerungsablauf 16.3). Befinden sich schließlich alle Mäheinheiten 3, 4 wieder in der Arbeitsposition 20 und bewegt sich die landwirtschaftliche Arbeitsmaschine 5 wieder auf der von einem Routenplan 8 bestimmten Zurückzulegende Fahrstrecke 7 wird schließlich die Differentialsperre wieder aktiviert (Steuerungsablauf 16.1).

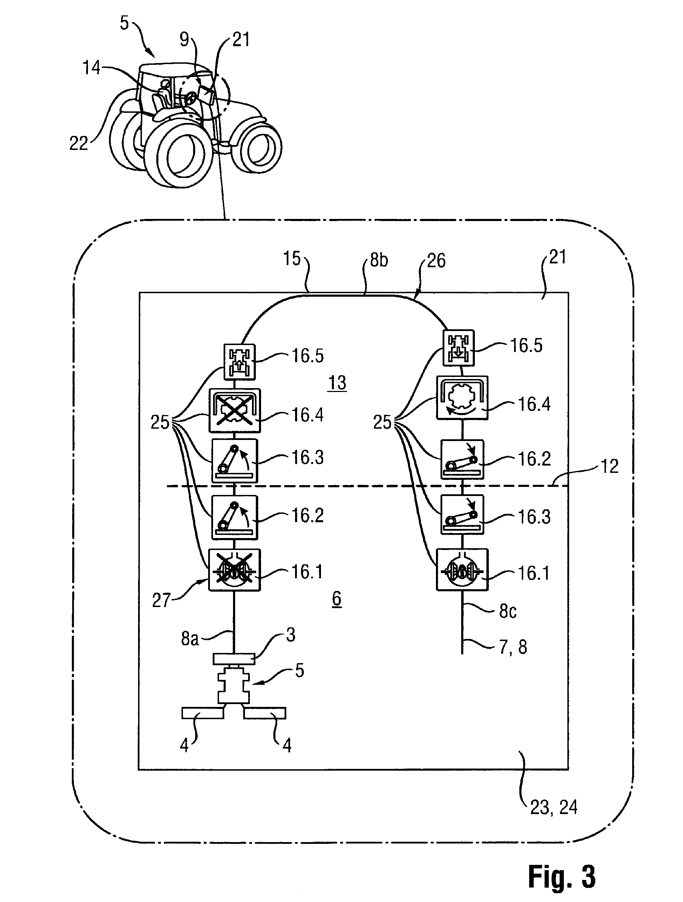

Damit der Fahrer 14 der landwirtschaftlichen Arbeitsmaschine 5 präzise über die Abarbeitung der gewählten Steuersequenz 15 unterrichtet ist, verfügt die erfindungsgemäße landwirtschaftliche Arbeitsmaschine 5 gemäß Figur 3 über eine Visualisierungseinrichtung 21, die entweder Bestandteil der bereits beschriebenen Steuer- und Regeleinrichtung 9 oder separat in der Fahrerkabine 22 der landwirtschaftlichen Arbeitsmaschine 5 angeordnet sein kann. Die erfindungsgemäße Visualisierungseinrichtung 21 verfügt über ein Display 23, vorzugsweise ein als Touchscreen-Monitor 24 ausgeführtes Display 23. In dem Display 23 ist das zu bearbeitende Territorium 6 und der Vorgewendebereich 13 zumindest auszugsweise, gegebenenfalls auch vollständig abgebildet. Weiter sind die landwirtschaftliche Arbeitsmaschine 5, hier die Traktor (2) - Mähwerk (3,4) - Kombination und die von der landwirtschaftlichen Arbeitsmaschine 5 zurückzulegende Fahrstrecke 7 visualisiert. Es liegt im Rahmen der Erfindung, dass die Position der visualisierten landwirtschaftlichen Arbeitsmaschine 5 mittels an sich bekannter und daher hier nicht näher beschriebener GPS-Systeme ermittelt und die zurückzulegende Fahrstrecke 7 aus einem vorprogrammierten Routenplan 8 entnommen wird. Erfindungsgemäß sind in dem Display 23 der Visualisierungseinrichtung 21 zudem die von der landwirtschaftlichen Arbeitsmaschine 5 abzuarbeitenden Steuerungsabläufe 16.1-16.5 in der Weise visualisiert, dass die Steuerungsabläufe 16.1-16.5 durch graphische Abbildungen 25 dargestellt sind, die unmittelbar der von der landwirtschaftlichen Arbeitsmaschine 5 zurückzulegenden Fahrstrecke 7 zugeordnet und in der Reihenfolge ihrer Abarbeitung positioniert sind.

In Analogie zu dem in den Figuren 1 und 2 dargestellten Vorgewendemanagment 1 bildet die in dem Display 23 visualisierte Fahrstrecke 7 den sogenannten Vorgewendeweg 26, der sich aus einem aus dem zu bearbeitenden Territorium 6 herausführenden Fahrtroutenabschnitt 8a, einem Vorgewendeabschnitt 8b und einem in das zu bearbeitende Territorium 6 hineinführenden Fahrtroutenabschnitt 8c zusammensetzt. Gemäß dem dargestellten Ausführungsbeispiel, welches hier nur beispielhaft für eine Vielzahl möglicher, vom Typ der jeweiligen landwirtschaftlichen Arbeitsmaschine 5 und der Gestalt der zurückzulegenden Fahrstrecke 7 abhängender Steuersequenzen 15 beschrieben ist, setzt sich eine Steuersequenz 15 aus einer Vielzahl von in dem Display 23 visualisierten Steuerungsabläufen 16 zusammen. Damit die den jeweiligen Steuerungsablauf 16.1 -16.5 repräsentierenden graphischen Abbildungen 25 für den Bediener 14 der landwirtschaftlichen Arbeitsmaschine 5 leicht verständlich ist, sind die graphischen Abbildungen 25 als Bild- und/oder Textelemente umfassende Ikons 27 ausgeführt, wobei im dargestellten Ausführungsbeispiel nach Figur 3 Wortelemente keine Verwendung finden. Zudem sind die Ikons 27 der zurückzulegenden Fahrstrecke 7 der Abarbeitung des durch sie repräsentierten Steuerungsablaufs 16 vorauseilend zugeordnet, d.h. das jeweilige Ikon 27 ist einem geographischen Punkt der zurückzulegenden Fahrtstrecke 7 zugeordnet, an dem der jeweilige Steuerungsablauf 16.1 - 16.5 noch nicht aktiviert wurde. Zugleich bleibt das einen Steuerungsablauf 16.1- 16.5 repräsentierende Ikon 27 auch nach Abarbeitung des jeweiligen Steuerungsablaufs 16.1-16.5 sichtbar, sodass der Bediener 14 der landwirtschaftlichen Arbeitsmaschine 5 stets den Überblick über die gesamte abzuarbeitende Steuersequenz 15 behält.

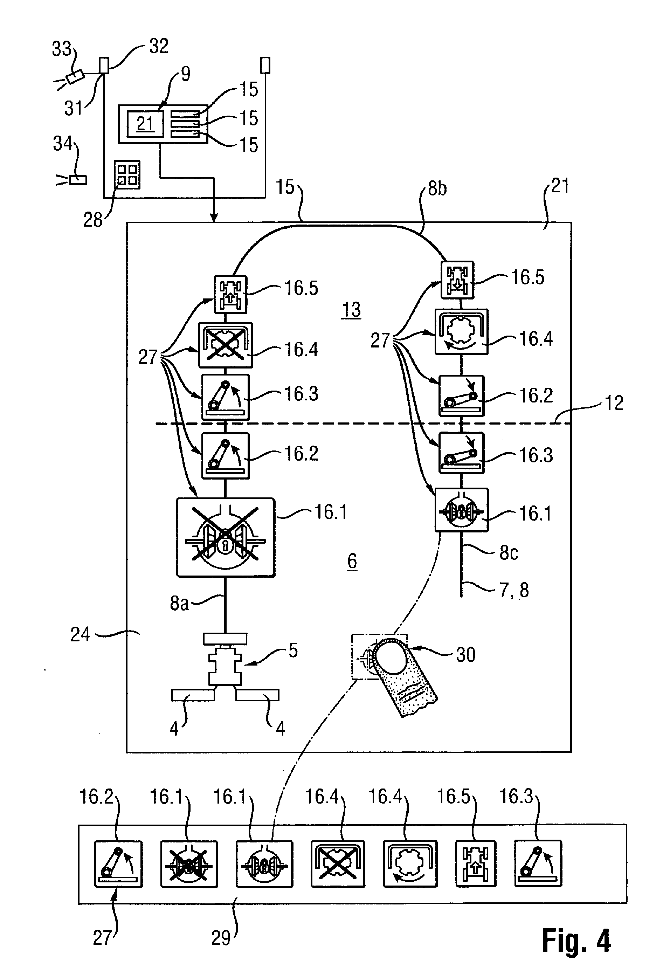

Weiter kann gemäß Figur 4 die Visualisierung der Steuerungsabläufe 16.1-16.5 so strukturiert sein, dass bei Aktivierung einer Steuersequenz 15 alle Steuerungsabläufe 16.1-16.5 dieser Steuersequenz 15 durch Visualisierung der jeweiligen Ikons 27 angezeigt werden und das Ikon 27 des jeweils abzuarbeitenden Steuerungsablaufs 16.1 der Abarbeitung des jeweiligen Steuerungsablaufs 16.1-16.5 vorauseilend hervorgehoben wird. Im dargestellten Ausführungsbeispiel wird das entsprechende Ikon 27 vergrößert dargestellt, wobei es im Rahmen der Erfindung liegt, dass das jeweilige Ikon 27 auch durch Blinken oder Farbumschlag hervorgehoben werden kann. Weiter liegt es im Rahmen der Erfindung, dass die landwirtschaftliche Arbeitsmaschine 5 als beliebig ausgeführtes Zugfahrzeug mit zumindest einem adaptierten Arbeitsgerät oder als landwirtschaftliche Erntemaschine mit Erntevorsatz ausgeführt sein kann und die die Steuersequenz 15 bildenden Steuerungsabläufe 16 das Verbringen des Arbeitsgerätes oder des Erntevorsatzes in eine Nichtarbeitsposition 19 beim Ausfahren aus dem zu bearbeitenden Territorium 6 und das Verbringen des Arbeitsgerätes oder Erntevorsatzes in eine Arbeitsposition 20 beim Einfahren in das zu bearbeitende Territorium 6 bewirken. Zudem liegt es im Rahmen der Erfindung, dass die in der Steuer- und Regeleinrichtung 9 hinterlegten Steuersequenzen 15 frei programmierbar sind, d.h. die von der jeweiligen Steuersequenz 15 auszuführenden Steuerungsabläufe 16 sind frei auswähl-, speicher- und wieder abrufbar. Im einfachsten Fall kann die freie Programmierbarkeit der Steuersequenzen 15 von einem Bediener 14 durch Betätigung der den jeweiligen Steuerungsablauf 16 auslösenden Bedientasten 28 und/oder durch Editierung an der Visualisierungseinrichtung 21 bewirkt werden. Ist die Visualisierungseinrichtung 21 zudem als Touchscreen-Monitor 24 ausgeführt, der ein Menüfeld 29 aufweist in dem die die möglichen Steuerungsabläufe 16.1-16.5 repräsentierenden Ikons 27 abgelegt sind kann die Programmierung der Steuersequenz 15 beispielsweise dadurch bewirkt werden, dass das jeweilige Ikon 27 in die visualisierte zurückzulegende Fahrstrecke 7 durch Ziehen 30 hineinbewegt wird. Weiter liegt es im Rahmen der Erfindung, dass der landwirtschaftlichen Arbeitsmaschine 5 ein in der Visualisierungseinrichtung 21 zumindest teilweise visualisierter Routenplan 8 und zumindest ein Spurführungssystem 31 in der Weise zugeordnet sind, dass die landwirtschaftliche Arbeitsmaschine 5 selbsttätig den vordefinierten und in dem Routenplan 8 abgespeicherten Fahrtrouten 7 folgt. Ein vollständig autonomes Fahren der landwirtschaftlichen Arbeitsmaschine 5 auf dem zu bearbeitenden Territorium 6 und in dem Vorgewendebereich 13 wird dann erreicht, wenn der Routenplan 8 auch die im Vorgewendebereich 13 zurückzulegende Fahrstrecke 8b umfasst und das Spurführungssystem 31 die landwirtschaftliche Arbeitsmaschine 5 selbsttätig entlang dieser Fahrstrecke 8b führt und die landwirtschaftliche Arbeitsmaschine 5 selbsttätig die vorprogrammierte, die gewählten Steuerungsabläufe 16 umfassende Steuersequenz 15 abarbeitet. In an sich bekannter und daher hier nicht näher ausgeführt kann das der landwirtschaftlichen Arbeitsmaschine 5 zugeordnete Spurführungssystem 31 als GPS-basiertes Spurführungssystem 32, als kamerabasiertes Spurführungssystem 33 oder als Sensor-basiertes Spurführungssystem 34, wobei hier Infrarot- oder Lasersensoren vorgesehen sein können, oder als eine Kombination aus diesen Spurführungssystemen 32-34 ausgeführt sein.

**Bezugszeichenliste:**

| | | | |
|---|---|---|---|
| 1 | Vorgewendemanagement | 31 | Spurführungssystem |
| 2 | Traktor | 32 | GPS-basiertes Spurführungssystem |
| 3 | Mähwerk | 33 | Kamera-basiertes Spurführungssysterr |
| 4 | Mähwerk | 34 | Sensor-basiertes Spurführungssystem |
| 5 | landwirtschaftliche Arbeitsmaschine | | |
| 6 | Territorium | | |
| 7 | zurückzulegende Fahrstrecke | | |
| 8 | Routenplan | | |
| 9 | Steuer- und Regeleinrichtung | | |
| 10 | Frontzapfwelle | | |
| 11 | Heckzapfwelle | | |
| 12 | Grenzlinie | | |
| 13 | Vorgewendebereich | | |
| 14 | Bediener | | |
| 15 | Steuersequenz | | |
| 16.1-16.5 | Steuerungsablauf | | |
| 17 | Fahrzeugachse | | |
| 18 | Fahrzeugachse | | |
| 19 | Nichtarbeitsposition | | |
| 20 | Arbeitsposition | | |
| 21 | Visualisierungseinrichtung | | |
| 22 | Fahrerkabine | | |
| 23 | Display | | |
| 24 | Touchscreen-Monitor | | |
| 25 | graphische Abbildungen | | |
| 26 | Wendeweg | | |
| 27 | Ikon | | |
| 28 | Bedientasten | | |
| 29 | Menüfeld | | |
| 30 | Ziehen des Ikons | | |

## Patentansprüche

1. Landwirtschaftliche Arbeitsmaschine mit einer Vorrichtung zur Visualisierung von Steuerungsabläufen der landwirtschaftlichen Arbeitsmaschine, wobei die der landwirtschaftlichen Arbeitsmaschine zugeordnete Visualisierungseinrichtung zumindest eine von der landwirtschaftlichen Arbeitsmaschine zurückzulegende Fahrstrecke visualisiert
**dadurch gekennzeichnet,**
**dass** die Steuerungsabläufe (16) in graphischen Abbildungen (25) hinterlegt sind und die graphischen Abbildungen (25) entlang der zurückzulegenden Fahrstrecke (7) in der Reihenfolge ihrer Abarbeitung in der Visualisierungseinrichtung (21) angezeigt werden.

2. Landwirtschaftliche Arbeitsmaschine nach Anspruch 1,
**dadurch gekennzeichnet,**
**dass** die zurückzulegende Fahrstrecke (7) von dem Wendeweg (26) einer landwirtschaftlichen Arbeitsmaschine (5) im Vorgewende (13) eines zu bearbeitenden Territoriums (6) gebildet wird, wobei der Wendeweg (26) vorzugsweise einen aus dem zu bearbeitenden Territorium (6) herausführenden Fahrtroutenabschnitt (8a), einen Vorgewendeabschnitt (8b) und einen in das zu bearbeitende Territorium (6) hineinführenden Fahrtroutenabschnitt (8c) umfasst.

3. Landwirtschaftliche Arbeitsmaschine nach einem der vorhergehenden Ansprüche,
**dadurch gekennzeichnet,**
**dass** eine Vielzahl von Steuerungsabläufen (16.1-16.5) eine Steuersequenz (15) bilden.

4. Landwirtschaftliche Arbeitsmaschine nach Anspruch 3,
**dadurch gekennzeichnet,**
**dass** jeder Steuerungsablauf (16) einer Steuersequenz (15) durch ein Bild- und/oder Textelemente umfassendes Ikon (27) visualisiert wird.

5. Landwirtschaftliche Arbeitsmaschine nach Anspruch 4,
**dadurch gekennzeichnet,**
**dass** die Anzeige eines einen Steuerungsablauf (16) repräsentierenden Ikons (27) der Abarbeitung des jeweiligen Steuerungsablaufs (16) vorauseilt.

6. Landwirtschaftliche Arbeitsmaschine nach Anspruch 5,
**dadurch gekennzeichnet,**
**dass** das einen abgearbeiteten Steuerungsablauf (16) repräsentierende Ikon (27) bei Abarbeitung nachfolgender Steuerungsabläufe (16) in der Visualisierungseinrichtung (21) sichtbar bleibt.

7. Landwirtschaftliche Arbeitsmaschine nach Anspruch 4,
**dadurch gekennzeichnet,**
**dass** bei Aktivierung einer Steuersequenz (15) alle Steuerungsabläufe (16) dieser Steuersequenz (15) durch Visualisierung der jeweiligen Ikons (27) angezeigt werden und das Ikon (27) des jeweils abzuarbeitenden Steuerungsablaufs (16) der Abarbeitung des jeweiligen Steuerungsablaufs (16) vorauseilend hervorgehoben wird.

8. Landwirtschaftliche Arbeitsmaschine nach Anspruch 7,
**dadurch gekennzeichnet,**
**dass** die Hervorhebung durch Blinken oder Farbumschlag des jeweiligen Ikons (27) bewirkt wird.

9. Landwirtschaftliche Arbeitsmaschine nach einem der vorhergehenden Ansprüche,
**dadurch gekennzeichnet,**
**dass** die landwirtschaftliche Arbeitsmaschine (5) ein Zugfahrzeug (2) mit zumindest einem adaptierten Arbeitsgerät (3, 4) oder eine landwirtschaftliche Erntemaschine mit Erntevorsatz umfasst und die die Steuersequenz (15) bildenden Steuerungsabläufe (16) das Verbringen des Arbeitsgerätes (3, 4) oder Erntevorsatzes in eine Nichtarbeitsposition (19) beim Ausfahren aus dem zu bearbeitenden Territorium (6) und das Verbringen des Arbeitsgerätes (3, 4) oder Erntevorsatzes in eine Arbeitsposition (20) beim Einfahren in das zu bearbeitende Territorium (6) bewirken.

10. Landwirtschaftliche Arbeitsmaschine nach einem der vorhergehenden Ansprüche,
**dadurch gekennzeichnet,**
**dass** die Steuersequenz (15) frei programmierbar ist.

11. Landwirtschaftliche Arbeitsmaschine nach Anspruch 10,
**dadurch gekennzeichnet,**
**dass** die freie Programmierbarkeit der Steuersequenz (15) von einem Bediener (14) durch Betätigung der den jeweiligen Steuerungsablauf (16) auslösenden Bedientasten (28) und/oder durch Editierung an der Visualisierungseinrichtung (21) bewirkt wird.

12. Landwirtschaftliche Arbeitsmaschine nach Anspruch 11,
**dadurch gekennzeichnet,**
**dass** die Visualisierungseinrichtung (21) einen Touchscreen-Monitor (24) umfasst der ein Menüfeld (29) aufweist in dem die die möglichen Steuerungsabläufe (16) repräsentierenden Ikons (27) abgelegt sind, wobei die Programmierung der Steuersequenz (15) durch Ziehen (30) des jeweiligen Ikons (27) in die visualisierte zurückzulegende Fahrstrecke (7) erfolgt.

13. Landwirtschaftliche Arbeitsmaschine nach einem der vorhergehenden Ansprüche,
**dadurch gekennzeichnet,**
**dass** der landwirtschaftlichen Arbeitsmaschine (5) ein in der Visualisierungseinrichtung (21) zumindest teilweise visualisierter Routenplan (8) und zumindest ein Spurführungssystem (31) in der Weise zugeordnet sind, dass die landwirtschaftliche Arbeitsmaschine (5) selbsttätig den vordefinierten und in dem Routenplan (8) abgespeicherten Fahrtrouten (7) folgt.

14. Landwirtschaftliche Arbeitsmaschine nach Anspruch 13,
**dadurch gekennzeichnet,**
**dass** der Routenplan (8) auch die im Vorgewende (13) zurückzulegende Fahrstrecke (8a-c) umfasst und das Spurführungssystem (31) die landwirtschaftliche Arbeitsmaschine (5) selbsttätig entlang dieser Fahrstrecke (8a-c) führt und die landwirtschaftliche Arbeitsmaschine (5) selbsttätig die vorprogrammierte, die gewählten Steuerungsabläufe (16) umfassende Steuersequenz (15) abarbeitet.

15. Landwirtschaftliche Arbeitsmaschine nach einem der Ansprüche 13 und 14,
**dadurch gekennzeichnet,**
**dass** das Spurführungssystem (31) GPS-basiert (32) und/oder Kamera-basiert (33) und/oder Sensor-basiert (34) arbeitet.

16. Landwirtschaftliche Arbeitsmaschine nach Anspruch 15,
**dadurch gekennzeichnet,**
**dass** der Sensor als Laser-Sensor ausgeführt ist.

## Claims

1. An agricultural working machine having an apparatus for the visualisation of control procedures of the agricultural working machine, wherein the visualisation device associated with the agricultural working machine visualises at least one travel path to be covered by the agricultural working machine,
**characterised in that**
the control procedures (16) are stored in graphic images (25) and the graphic images (25) are displayed in the visualisation device (21) along the travel path (7) to be covered in the sequence in which they are performed.

2. An agricultural working machine according to claim 1 **characterised in that** the travel path (7) to be covered is formed by the turning path (26) of an agricultural working machine (5) in the headland (13) of a territory (6) to be worked, wherein the turning path (26) preferably includes a travel route portion (8a) leading out of the territory (6) to be worked, a headland portion (8b) and a travel route portion (8c) leading into the territory (6) to be worked.

3. An agricultural working machine according to one of the preceding claims **characterised in that** a plurality of control procedures (16.1-16.5) form a control sequence (15).

4. A agricultural working machine according to claim 3 **characterised in that** each control procedure (7) of a control sequence (15) is visualised by an icon (27) including image elements and/or text elements.

5. An agricultural working machine according to claim 4 **characterised in that** the display of an icon (27) representing a control procedure (16) precedes implementation of the respective control procedure (16).

6. An agricultural working machine according to claim 5 **characterised in that** the icon (27) representing an implemented control procedure (16) remains visible in the visualisation device (21) upon implementation of subsequent control procedures (16).

7. An agricultural working machine according to claim 4 **characterised in that** upon activation of a control sequence (15) all control procedures (16) of that control sequence (15) are displayed by visualisation of the respective icon (27) and the icon (27) of the respective control procedure (16) to be implemented is emphasised in preceding relationship with implementation of the respective control procedure (16).

8. An agricultural working machine according to claim 7 **characterised in that** the respective icon (27) is emphasised by flashing or a colour change.

9. An agricultural working machine according to one of the preceding claims **characterised in that** the agricultural working machine (5) includes a tractor vehicle (2) with at least one adapted working device (3, 4) or an agricultural harvester with front-mounted harvesting attachment and the control procedures (16) forming the control sequence (15) provide for moving the working device (3, 4) or the front-mounted harvesting attachment into a non-working position (19) when moving out of the territory (6) to be worked and moving the working device (3, 4) or the front-mounted harvesting attachment into a working position (20) when moving into the territory (6) to be worked.

10. An agricultural working machine according to one of the preceding claims **characterised in that** the control sequence (15) is freely programmable.

11. An agricultural working machine according to claim 10 **characterised in that** the free programmability of the control sequence (15) is caused by an operator (14) by actuation of the operating buttons (28) for triggering the respective control procedure (16) and/or by editing at the visualisation device (21).

12. An agricultural working machine according to claim 11 **characterised in that** the visualisation device (21) includes a touchscreen monitor (24) having a menu field (29) in which the icons (27) representing the possible control procedures (16) are disposed, wherein programming of the control sequence (15) is effected by dragging (30) the respective icon (27) into the visualised travel path (7) to be covered.

13. An agricultural working machine according to one of the preceding claims **characterised in that** a route map (6) which is at least partially visualised in the visualisation device (21) and at least one track-guidance system (31) are associated with the agricultural working machine (5) in such a way that the agricultural working machine (5) automatically follows the pre-defined travel routes (7) stored in the route map (8).

14. An agricultural working machine according to claim 13 **characterised in that** the route map (8) also includes the travel path (8a-c) to be covered in the headland (13) and the track-guidance system (31) automatically guides the agricultural working machine (5) along said travel path (8a-c) and the agricultural working machine (5) automatically implements the pre-programmed control sequence (15) comprising the selected control procedures (16).

15. An agricultural working machine according to one of claims 13 and 14 **characterised in that** the track-guidance system (31) operates in GPS-based manner (32) and/or camera-based manner (33) and/or sensor-based manner (34).

16. An agricultural working machine according to claim 15 **characterised in that** the sensor is in the form of a laser sensor.

## Revendications

1. Engin agricole comprenant un dispositif de visualisation des processus de commande de l'engin agricole, le dispositif de visualisation associé à l'engin agricole visualisant au moins un parcours à parcourir par l'engin agricole, **caractérisé en ce que** les processus de commande (16) sont mémorisés sous forme de symboles graphiques (25), et les symboles graphiques (25) sont affichés dans le dispositif de visualisation (21) le long du parcours à parcourir (7) dans l'ordre de leur exécution.

2. Engin agricole selon la revendication 1, **caractérisé en ce que** le parcours à parcourir (7) est formé par le trajet de retournement (26) d'un engin agricole (5) dans la tournière (13) d'un territoire à travailler (6), le trajet de retournement (26) comportant de préférence une portion d'itinéraire (8a) conduisant hors du territoire à travailler (6), une portion de tournière (8b) et une portion d'itinéraire (8c) conduisant dans le territoire à travailler (6).

3. Engin agricole selon une des revendications précédentes, **caractérisé en ce qu'**une pluralité de processus de commande (16.-16.5) forment une séquence de commande (15).

4. Engin agricole selon la revendication 3, **caractérisé en ce que** chaque processus de commande (16) d'une séquence de commande (15) est visualisé par l'intermédiaire d'une icône (27) comprenant des éléments d'image et/ou de texte.

5. Engin agricole selon la revendication 4, **caractérisé en ce que** l'affichage d'une icône (27) représentant un processus de commande (16) précède l'exécution du processus de commande (16) concerné.

6. Engin agricole selon la revendication 5, **caractérisé en ce que** l'icône (27) représentant un processus de commande (16) exécuté reste visible dans le dispositif de visualisation (21) lors de l'exécution de processus de commande ultérieurs (16).

7. Engin agricole selon la revendication 4, **caractérisé en ce que**, lors de l'activation d'une séquence de commande (15), tous les processus de commande (16) de cette séquence de commande (15) sont affichés par visualisation des icônes concernées (27), et l'icône (27) du processus de commande (16) en cours d'exécution est mise en évidence avant l'exécution du processus de commande (16) concerné.

8. Engin agricole selon la revendication 7, **caractérisé en ce que** la mise en évidence est réalisée par clignotement ou changement de couleur de l'icône (27) correspondante.

9. Engin agricole selon une des revendications précédentes, **caractérisé en ce que** l'engin agricole (5) comprend un véhicule de traction (2) avec au moins un appareil de travail adapté (3, 4) ou une machine agricole de récolte avec équipement frontal de récolte, et les processus de commande (16) formant la séquence de commande (15) provoquent le passage de l'appareil de travail (3, 4) ou de l'équipement frontal de récolte dans une position de non-travail (19) lors de la sortie du territoire à travailler (6) et le passage de l'appareil de travail (3, 4) ou de l'équipement frontal de récolte dans une position de travail (20) lors de l'entrée dans le territoire à travailler (6).

10. Engin agricole selon une des revendications précédentes, **caractérisé en ce que** la séquence de commande (15) est librement programmable.

11. Engin agricole selon la revendication 10, **caractérisé en ce que** la libre programmabilité de la séquence de commande (16) par un utilisateur (14) est obtenue par actionnement des touches de commande (28) déclenchant le processus de commande (16) concerné et/ou par édition sur le dispositif de visualisation (21).

12. Engin agricole selon la revendication 11, **caractérisé en ce que** le dispositif de visualisation (21) comprend un moniteur à écran tactile (24) qui comporte un champ de menu (29) dans lequel sont rangées les icônes (27) représentant les processus de commande (16) possibles, la programmation de la séquence de commande (15) s'effectuant par glissement (30) de l'icône (27) concernée vers le parcours à parcourir visualisé (7).

13. Engin agricole selon une des revendications précédentes, **caractérisé en ce qu'**à l'engin agricole (5) sont associés un plan d'itinéraires (8) au moins partiellement visualisé dans le dispositif de visualisation (21) et au moins un système de guidage (31), de façon que l'engin agricole (5) suive automatiquement les itinéraires (7) prédéfinis et mémorisés dans le plan d'itinéraires (8).

14. Engin agricole selon la revendication 13, **caractérisé en ce que** le plan d'itinéraires (8) comprend aussi le parcours (8a-c) à parcourir dans la tournière (13), et le système de guidage (31) guide l'engin agricole (5) automatiquement le long de ce parcours (8a-c), et l'engin agricole (5) exécute automatiquement la séquence de commande (15) préprogrammée comprenant les processus de commande sélectionnés (16).

15. Engin agricole selon une des revendications 13 et 14, **caractérisé en ce que** le système de guidage (31) fonctionne sur la base d'un GPS (32) et/ou sur la base d'une caméra (33) et/ou sur la base d'un capteur (34).

16. Engin agricole selon la revendication 15, **caractérisé en ce que** le capteur est conformé en capteur à laser.
